Europäisches Patentamt

European Patent Office

Office européen des brevets

(19)

(11) Numéro de publication: **0 446 101 B1**

(12) **FASCICULE DE BREVET EUROPEEN**

(45) Date de publication de fascicule du brevet: **30.11.94**  (51) Int. Cl.⁵: **G01P 5/00**, G01S 7/48

(21) Numéro de dépôt: **91400532.7**

(22) Date de dépôt: **27.02.91**

(54) **Système à laser, de mesure de l'angle d'incidence d'un aéronef.**

(30) Priorité: **08.03.90 FR 9002946**

(43) Date de publication de la demande:
**11.09.91 Bulletin 91/37**

(45) Mention de la délivrance du brevet:
**30.11.94 Bulletin 94/48**

(84) Etats contractants désignés:
**DE GB IT**

(56) Documents cités:
**EP-A- 0 009 533**
**EP-A- 0 227 911**
**EP-A- 0 272 912**
**FR-A- 2 582 403**
**US-A- 4 330 763**

(73) Titulaire: **SEXTANT Avionique**
**5/7 rue Jeanne Braconnier**
**Parc Tertiaire**
**F-92366 Meudon la Forêt Cedex (FR)**

(72) Inventeur: **Morbieu, Bertrand**
**20 rue Freycinet**
**F-26000 Valence (FR)**
Inventeur: **Torregrosa, Michel**
**Lotissement "Les Cantons"**
**F-26760 Beaumont Les Valence (FR)**

(74) Mandataire: **Bloch, Gérard et al**
**2, square de l'Avenue du Bois**
**F-75116 Paris (FR)**

**Description**

On connait déjà un système de mesure de l'angle d'incidence d'un aéronef, par exemple un avion ou un hélicoptère, l'incidence étant l'angle formé entre l'axe longitudinal de l'aéronef et l'écoulement de l'air, c'est-à-dire le vecteur vitesse air, système également désigné sous le nom de sonde d'incidence, qui comporte un générateur laser à $CO_2$ à raie monochromatique, une optique d'émission du faisceau laser, une optique de réception du faisceau rétrodiffusé, également monochromatique, provenant essentiellement des aérosols, dont le mouvement ou l'agitation est provoqué par celui de l'air, et un interféromètre recevant une partie du faisceau d'émission et le faisceau rétrodiffusé, procédant à une transposition du domaine des ondes optiques au domaine des ondes radiofréquence, pour en déduire la fréquence Doppler de rétrodiffusion et donc la composante de la vitesse air selon l'axe du faisceau laser d'émission.

Un tel système est un système d'anémométrie longitudinale.

La vitesse air et l'incidence sont des paramètres qui peuvent être affichés sur des instruments de bord et qui servent, pour le contrôle et le pilotage de l'aéronef, à l'élaboration puis à l'affichage de certains des paramètres de vol de l'aéronef.

Mais un tel système anémométrique qui serait embarqué à bord d'un aéronef présenterait des inconvénients. Un générateur laser à $CO_2$, à cause de son dispositif de refroidissement, est cher et encombrant. L'encombrement, dont il faudrait d'ailleurs disposer pour utiliser un générateur laser à $CO_2$ dans une telle application, serait encore augmenté par la nécessaire proximité de l'interféromètre et des moyens de pompage du générateur laser. Comme, dans l'application dont il s'agit, une mesure anémométrique, le générateur laser devrait se trouver au voisinage de la "peau" de l'aéronef, on conçoit facilement que le générateur laser à $CO_2$ n'est finalement pas très approprié pour cette application, tout du moins en tant qu'équipement de série.

Par ailleurs, on rappelera ici l'existence de l'anémométrie à franges et de l'anémométrie à temps de passage permettant des mesures, non plus selon l'axe du faisceau, mais transverses au faisceau et à courtes distances. Or des mesures à courtes distances d'un aéronef sont entachées d'erreurs dues aux perturbations aérodynamiques.

La présente invention vise donc à proposer une sonde d'incidence à générateur laser permettant des mesures longitudinales dans une tranche d'air sondée relativement éloignée de l'aéronef, et donc la détermination de l'incidence vraie, et dont les équipements associés à la tête optique, c'est-à-dire les équipements de commande et de mesure, puissent être déportés dans l'aéronef.

A cet effet, la présente invention concerne un système de mesure de l'angle d'incidence d'un aéronef comprenant au moins une sonde comportant un générateur laser à raie d'émission monochromatique, une optique d'émission, une optique de réception d'un rayonnement monochromatique de rétrodiffusion par les aérosols, des moyens de pompage du générateur laser, un interféromètre de détection recevant une partie du faisceau laser d'émission et le rayonnement rétrodiffusé et des moyens pour, après battement des faisceaux émis et rétrodiffusé, déterminer la fréquence Doppler du faisceau rétrodiffusé et en déduire la vitesse de l'air le long de l'axe du faisceau d'émission, système caractérisé par le fait que l'optique d'émission est agencée pour focaliser le faisceau d'émission sur une tranche d'air éloignée de l'aéronef, le générateur laser est disposé au voisinage de la peau de l'aéronef, les moyens de pompage et l'interféromètre sont déportés dans l'aéronef et la fréquence de la raie laser est adaptée pour que les liaisons entre la sonde, d'une part, et les moyens de pompage et l'interferomètre, d'autre part, soient réalisées par fibres optiques monomodes à maintien de polarisation.

Grâce à l'invention, la sonde peut avoir un encombrement réduit, être légère et être disposée, certes à proximité de la peau de l'aéronef, mais presque n'importe où en fonction des logements disponibles. Du fait des liaisons par fibres optiques, impossibles avec un laser à $CO_2$ de 10,6 $\mu$m de longueur d'onde, la sonde est passive, avec une isolation galvanique totale. Enfin, la sonde ne dépassant pas de la peau de l'aéronef, elle ne nuit ni à son aérodynamisme ni à sa furtivité.

De préférence, la sonde comporte un générateur laser solide, à Ylf (yttrium, lanthane, fluorure) dopé au Nd (néodyme), de 1 $\mu$m de longueur d'onde, pompé par des diodes laser et fonctionnant en mode "commutation de gain de pompage".

On peut aussi utiliser, comme générateur laser à cristal solide, qui peut ne pas être refroidi, un laser à Ylf, ou tout autre cristal, dopé à l'holmium (Ho), de 2 $\mu$m de longueur d'onde, qui présente l'avantage d'une innocuité occulaire.

Avantageusement, le système de mesure d'incidence comprend au moins trois sondes identiques disposées pour déterminer les trois composantes du vecteur vitesse air le long de leurs axes d'émission respectifs.

Dans ce cas, le système peut comprendre un groupe de commutation pour connecter cycliquement les moyens de pompage aux sondes et les sondes à l'interféromètre.

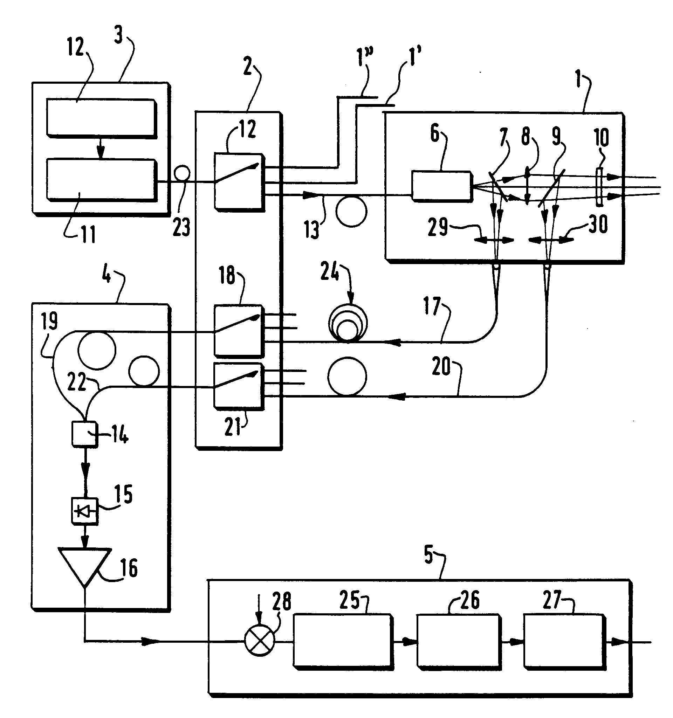

L'invention sera mieux comprise à l'aide de la description suivante de la forme de réalisation préférée du système d'anémométrie de l'invention, en référence à la figure unique qui le représente schématiquement.

Le système qui va être décrit, pour la mesure de l'incidence d'un aéronef, comporte ici trois sondes identiques et indépendantes 1, 1', 1", dont une seule, 1, a été représentée par souci de clarté, un groupe de commutation optique 2, un module de pompage 3, un module de détection 4 et un module de traitement 5.

Chaque sonde comporte ici un générateur laser Nd-Ylf 6 à raie d'émission monochromatique de longueur d'onde $\lambda_o$ = 1,047 $\mu$m, une première lame séparatrice 7 pour réfléchir un faisceau local de référence, partie du faisceau d'émission, sur le module de détection, une lentille d'émission 8 focalisant le faisceau d'émission sur une tranche d'air distante ici d'environ 25 m, donc non perturbée par le déplacement de l'aéronef, une deuxième lame séparatrice 9, laissant passer le faisceau d'émission et réfléchissant sur le module de détection un faisceau rétrodiffusé et une lame $\frac{\lambda}{4}$ (quart d'onde) 10. Le faisceau rétrodiffusé provient essentiellement des aérosols. Comme leurs vitesses d'agitation sont très faibles, leur spectre de rétrodiffusion est aussi monochromatique, de pulsation $\omega_D$. Le faisceau d'émission du générateur 6 est à polarisation rectiligne transverse orientée pour assurer la réflexion sur la lame 1 du faisceau local de référence.

La lame 10 transforme, à l'aller, la polarisation rectiligne en polarisation circulaire et, au retour, la polarisation circulaire du faisceau rétrodiffusé en polarisation rectiligne parallèle à celle du faisceau d'émission. La transmission, à travers la lame 9, du faisceau d'émission est quasiment totale, tout comme la réflexion, sur cette lame, du faisceau rétrodiffusé.

L'onde locale de référence, réfléchie sur la lame 7, est de la forme

$$A_o = a_o \cos (\omega_o t + \phi_o) \qquad (1)$$

dans laquelle $\omega_o$ est la pulsation du générateur laser, telle que

$$\omega_o = 2 \pi f_o$$
$$= 2 \pi \frac{c}{\lambda_o}$$

L'onde rétrodiffusée est de la forme

$$A_D = a_D \cos[(\omega_o + \omega_D)t + \phi_D] \qquad (2)$$

dans laquelle $\omega_D$ est la pulsation Doppler de rétrodiffusion et la phase $\phi_D$ est différente de la phase de référence $\phi_o$.

Le générateur 6 est pompé par des diodes laser de pompage 11 contrôlées par un bloc 12 de commande de fonctionnement en mode "commutation de gain de pompage" et produisant un faisceau de pompe concentré.

En effet, une raie Doppler de rétrodiffusion est généralement élargie, à cause de
- la dispersion de vitesses dans la tranche d'air sondée,
- le glissement en fréquence possible du générateur laser pendant l'émission de son impulsion,
- la durée limitée de cette impulsion.

Or la technique de la commutation du gain de pompage permet de produire des impulsions laser de plus longue durée (par exemple 800 ns) et soumises à un glissement en fréquence très faible (par exemple inférieur à 3 Mz.$\mu$s$^{-1}$). Sous réserve d'une compensation des trajets optiques au niveau de l'interferomètre, dont il sera question ci-après, et qui rend négligeable l'effet du glissement de fréquence du générateur, la largeur de la raie Doppler est satisfaisante (par exemple inférieure à 2 MHz).

Le signal de pompage est envoyé cycliquement à chacun des générateurs laser des trois sondes par une première fibre optique 23, un commutateur 12 du groupe de commutation 2, et une deuxième fibre optique 13.

Sur la figure ont été représentées les trois sorties du commutateur 12 respectivement reliées aux trois générateurs laser des trois sondes 1, 1', 1". De même, les trois sorties des deux autres commutateurs du groupe de commutation 2 ont aussi été représentées. Les trois commutateurs sont commandés en synchronisme.

Le module de détection 4 est un interferomètre, c'est-à-dire un récepteur hétérodyne, faisant battre l'onde de référence et l'onde rétrodiffusée pour transposer la mesure du domaine des ondes optiques au domaine des ondes radiofréquence. L'interferomètre 4 comprend un coupleur, ou mélangeur, 14, à maintien de polarisation, un photodétecteur 15, ici une photodiode PIN InGaS, et un amplificateur 16. L'onde de référence, réfléchie sur la lame 7, est transmise au coupleur 14, et à travers une lentille de focalisation 29, par une première fibre optique 17, le commutateur 18 et une deuxième fibre optique 19. L'onde rétrodiffusée, réfléchie sur la lame 9, est transmise au coupleur 14, et à travers une lentille de focalisation 30, par une première fibre optique 20, le commutateur 21 et une deuxième fibre optique 22. Les fibres optiques 23, 13, 17, 19, 20 et 22 sont des fibres monomode à maintien de polarisation, actuellement disponibles sur le marché pour le domaine de fréquences des générateurs laser considérés. Pour compenser la différence entre les trajets optiques aller et retour, il est intégré à la fibre 17 un bobinage de fibre 24 ici d'une trentaine de mètres.

Les ondes des relations (1) et (2) ci-dessus étant donc mélangées dans le coupleur 14, la photodiode 15 délivre un courant, abstraction faite de la composante continue et des composantes à haute fréquence, de la forme

$$2a_o \, a_D \cos(\omega_D t + \phi_D - \phi_o)$$

Après amplification (15), le signal est envoyé sur le module de traitement 5.

Le module 5 comporte, en série, un analyseur de spectre 25, un bloc 26 de recherche de raie, en fait du pic Doppler, et de calcul, par microcalculateur, des composantes du vecteur vitesse air, selon les axes des trois sondes, et une logique de commande 27, le vecteur vitesse air V étant tiré de l'équation

$$\omega_D = \frac{1}{\pi \lambda_o} \vec{V} . \vec{u}$$

$\vec{u}$ étant le vecteur unitaire suivant l'axe de chacune des sondes.

On peut prévoir, à l'entrée du module de traitement 5, un coupleur 28, relié à un oscillateur commandé en tension (VCO) ou à un synthétiseur.

On notera ici que le problème classique, du repérage, effectué au sol, des axes des sondes dans le système de référence de l'aéronef, est supposé avoir été résolu.

On notera aussi que, pour cette mesure d'incidence, les générateurs laser peuvent fonctionner aussi bien en régime continu qu'en régime impulsionnel.

Pour conclure, on soulignera que le système qui vient d'être décrit permet une mesure vraie et d'une bonne précision, avec une zone aveugle de mesure d'incidence et de dérapage réduite, et à une cadence pouvant être adaptée à l'altitude.

**Revendications**

1. Système de mesure de l'angle d'incidence d'un aéronef comprenant au moins une sonde (1) comportant un générateur laser (6) à raie d'émission monochromatique, une optique d'émission (7, 8, 9, 10), une optique (10, 9, 30) de réception d'un rayonnement monochromatique de rétrodiffusion par les aérosols, des moyens (3) de pompage du générateur laser, un interféromètre de détection (4) recevant une partie du faisceau laser d'émission et le rayonnement rétrodiffusé et des moyens (5) pour, après battement des faisceaux émis et rétrodiffusé, déterminer la fréquence Doppler du faisceau rétrodiffusé et en déduire la vitesse de l'air le long de l'axe du faisceau d'émission, système caractérisé par le fait que l'optique d'émission (8) est agencée pour focaliser le faisceau d'émission sur une tranche d'air éloignée de l'aéronef, le générateur laser (6) est disposé au voisinage de la peau de l'aéronef, les moyens de pompage (3) et l'interféromètre (4) sont déportés dans l'aéronef et la fréquence de la raie laser est adaptée pour que les liaisons entre la sonde (1), d'une part, et les moyens de pompage (3) et l'interféromètre (4), d'autre part, soient réalisées par fibres optiques monomode à maintien de polarisation (13, 23; 17, 19, 20, 22).

2. Système de mesure selon la revendication 1, dans lequel la sonde (1) comporte un générateur laser (6) à cristal solide.

3. Système de mesure selon la revendication 2, dans lequel le cristal laser est Nd-Ylf.

4. Système de mesure selon la revendication 2, dans lequel le cristal laser est dopé à l'holmium (Ho).

5. Système de mesure selon l'une des revendications 1 à 4, dans lequel il est prévu au moins trois sondes identiques (1, 1', 1″) disposées pour déterminer les trois composantes du vecteur vitesse air le long de leurs axes d'émission respectifs.

6. Système de mesure selon la revendication 5, dans lequel il est prévu un groupe de commutation (2) pour connecter cycliquement les moyens de pompage (3) aux sondes (1, 1', 1″) et les sondes (1, 1', 1″) à l'interféromètre (4).

7. Système de mesure selon l'une des revendications 5 et 6, dans lequel les moyens de pompage (3) comprennent des diodes laser de pompage (11) contrôlées par un bloc (12) de commande de fonctionnement en mode "commutation de gain de pompage" et produisant un faisceau pompe concentré.

**Claims**

1. A system for measuring the angle of incidence of an aircraft comprising at least one probe (1) comprising a laser generator (6) with a monochromatic emission beam, an emission optic (7, 8, 9, 10), an optic (10, 9, 30) for receiving monochromatic backscatter radiation by the aerosols, means (3) for pumping the laser generator, a detection beat-frequency meter (4) receiving a part of the emission laser beam and the backscatter radiation and means (5) for determining, after beating the emitted and backscattered rays, the Doppler frequency of the backscattered beam and deducting therefrom the speed of the air along the axis of the emission beam, a system characterised in that the emission optic (8) is arranged to focus the emission beam on a portion of air distant from the aircraft, the laser generator (6) is disposed in the proximity of the skin of the aircraft, the pumping means (3) and the beat-frequency meter (4) are transported in the aircraft and the frequency of the laser beam is adapted so that the connections between the probe (1), on the one hand, and the pumping means (3) and the beat-frequency meter (4), on the other hand, are realised by single mode optical fibres for maintaining polarisation (13, 23; 17, 19, 20, 22).

2. A measuring system according to claim 1, in which the probe (1) comprises a solid crystal laser generator (6).

3. A measuring system according to claim 2, in which the laser crystal is Nd-Ylf.

4. A measuring system according to claim 2, in which the laser crystal is doped with holmium (Ho).

5. A measuring system according to any of claims 1 to 4, in which at least three identical probes (1, 1', 1'') are provided, disposed to determine the three components of the air speed vector along their respective emission axes.

6. A measuring system according to claim 5, in which a commutation group (2) is provided to connect cyclically the pumping means (3) to the probes (1, 1', 1''), and the probes (1, 1', 1'') to the beat-frequency meter (4).

7. A measuring system according to one of claims 5 and 6, in which the pumping means (3) comprise pumping laser diodes (11) controlled by an operation control block (12) in "commutation of pumping gain" mode and producing a concentrated pump beam.

**Patentansprüche**

1. System zur Messung des Anstellwinkels eines Luftfahrzeuges, enthaltend mindestens eine Sonde (1), die einen Lasergenerator (6) für eine monochromatische Lichtemission, eine Emissionsoptik (7, 8, 9, 10), eine Empfängeroptik (10, 9, 30) zum Empfang einer durch die Aerosole bedingten monochromatischen Rückstreustrahlung, eine Einrichtung (3) zum Pumpen des Lasergenerators, ein Erfassungs-Interferometer (4), das einen Teil des Emissions-Laserstrahles und die Rückstreustrahlung empfängt, und eine Einrichtung (5) umfaßt, um nach der Überlagerung der emittierten und rückgastreuten Strahlenbündel die Doppler-Frequenz der Rückstreustrahlung zu bestimmen und daraus die Geschwindigkeit der Luft entlang der Achse der Emissionsstrahlung abzuleiten, dadurch gekennzeichnet, daß die Emissionsoptik (8) in der Lage ist, die Emissionsstrahlung auf einen vom Luftfahrzeug entfernten Luftabschnitt zu fokossieren, daß der Lasergenerator (6) in der Nähe der Haut des Luftfahrzeuges angeordnet ist, daß die Pumpeinrichtung (3) und das Interferometer (4) in dem Luftfahrzeug untergebracht sind, und daß die Frequenz des Laserlichtes so eingestellt ist, daß die Verbindungen zwischen der Sonde (1) mit der Pumpeinrichtung (3) einerseits und dem Interferometer (4) andererseits realisierbar sind mittels monomoden, optischen Fasern (13, 23; 17, 19, 20, 22) für die Polarisationsaufrechterhaltung.

2. System zur Messung nach Anspruch 1, bei dem die Sonde (1) einen Festkristall-Lasergenerator (6) umfaßt.

3. System zur Messung nach Anspruch 2, bei dem der Laserkristall vom Type Nd-Ylf ist.

4. System zur Messung nach Anspruch 2, bei dem der Laserkristall mit Holmium (Ho) dotiert ist.

5. System zur Messung nach einen der Ansprüche 1 bis 4, bei dem mindestens drei identische Sonden (1, 1', 1'') vorgesehen sind, die dazu dienen, die drei Komponenten des Luftgeschwindigkeitsvektors entlang ihrer jeweiligen Emissionsachsen zu bestimmen.

6. System zur Messung nach Anspruch 5, bei dem eine Kommutationsgruppe (2) vorgesehen ist, um zyklisch die Pumpeinrichtung (3) mit den Sonden (1, 1', 1'') und die Sonden (1, 1', 1'') mit dem Interferometer (4) zu verbinden.

7. System zur Messung nach einem der Ansprüche 5 und 6, bei dem die Pumpeinrichtung (3) Laserpumpdioden (11) umfaßt, die von einem Reglerblock (12) gesteuert werden, der nach dem Funktionsmodus "Kommutation der Pumpverstärkung" arbeitet und ein konzentriertes Pumpstrahlenbündel erzeugt.